# EUROPEAN PATENT SPECIFICATION

(11) **EP 3 016 784 B1**
(45) Date of publication and mention of the grant of the patent: **13.10.2021**
(21) Application number: 14752411.0
(22) Date of filing: 02.07.2014
(51) Int. Cl.: B25J 19/06

(54) **IMPROVED AGONIST - ANTAGONIST ACTUATED JOINT**
VERBESSERTES AGONIST/ANTAGONIST-BETÄTIGTES GELENK
ARTICULATION AMÉLIORÉE ACTIONNÉE DE MANIÈRE AGONISTE-ANTAGONISTE

(30) Priority: 02.07.2013 IT TO20130551
(43) Date of publication of application: 11.05.2016
(73) Proprietor: Fondazione Istituto Italiano di Tecnologia, 16163 Genova (IT)
(72) Inventor: TSAGARAKIS, Nikolaos, 16148 Genova (IT); MORFEY, Stephen, San Francisco, CA 94117 (US); CALDWELL, Darwin, 16010 Serra Ricco' (IT)
(74) Representative: Studio Torta S.p.A.
(86) International application number: PCT/IB2014/062801
(87) International publication number: WO 2015/001501

(56) References cited:
- US-A1- 2010 312 363
- AMIR JAFARI ET AL: "How design can affect the energy required to regulate the stiffness in variable stiffness actuators", ROBOTICS AND AUTOMATION (ICRA), 2012 IEEE INTERNATIONAL CONFERENCE ON, IEEE, 14 May 2012 (2012-05-14), pages 2792-2797, XP032450677, DOI: 10.1109/ICRA.2012.6224946 ISBN: 978-1-4673-1403-9
- ALIN ALBU-SCHAFFER ET AL: "Dynamic modelling and control of variable stiffness actuators", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 2155-2162, XP032291015, DOI: 10.1109/ROBOT.2010.5509850 ISBN: 978-1-4244-5038-1
- BYEONG-SANG KIM ET AL: "Design and Control of a Variable Stiffness Actuator Based on Adjustable Moment Arm", IEEE TRANSACTIONS ON ROBOTICS, IEEE SERVICE CENTER, PISCATAWAY, NJ, US, vol. 28, no. 5, 1 October 2012 (2012-10-01), pages 1145-1151, XP011474269, ISSN: 1552-3098, DOI: 10.1109/TRO.2012.2199649

## Description

### TECHNICAL FIELD

The present invention refers to a joint for robotic applications having an agonist-antagonist actuation, i.e. an actuation by means of a bending load to close the joint and an extending load to open the joint, if the joint is a hinge joint.

The need is felt to reduce the actuation energy of joints so as to use more compact actuators and therefore reduce weights and overall dimensions. Furthermore, this must not impact on the dynamic behaviour of the joint which must maintain quick response times.

### BACKGROUND ART

In said regard the incorporation of elastic elements on board the joints to store kinetic energy which can be released as necessary is known, but the known embodiments do not allow satisfactory reduction of the power and overall dimensions of the actuators.

In particular, it is known that the same elastic element which accumulates energy also performs the function of sole connection between the actuator and a movable element of the joint. In said configuration, the elastic element has a substantially high stiffness to guarantee high dynamic performance and reduce the reaction times of the joint, but the storable energy is low or null. This entails the use of actuators powered and sized on the basis of the maximum loads applied to the joint, with consequent inefficient energy management.

US-A1-2010312363 is considered the closest prior art and discloses an actuated joint having a first actuator and a second actuator for controlling the movement of the joint in an agonist-antagonist way, wherein the first actuator has a nominal or maximum power greater than that of the second actuator and the second actuator comprises at least a first elastic element. It is however possible to provide further optimization to such a joint.

### DISCLOSURE OF INVENTION

The object of the present invention is to provide an agonist-anatagonist actuated joint free from the drawbacks specified above.

The object of the present invention is obtained by means of an agonist-anatagonist actuated joint according to claim 1.

### BRIEF DESCRIPTION OF THE DRAWINGS

The invention will now be described with reference to the accompanying drawings, which illustrate a non-limiting implementation example thereof, in which:
- Figure 1 is a functional diagram of a first embodiment of a joint according to the present invention;
- figure 2 illustrates some components of figure 1;
- figure 3 is a lateral view of an embodiment of a joint according to the diagrams of figures 1 and 2;
- figure 4 is a longitudinal section of a detail of figure 3;
- figures 5 to 8 are functional diagrams of further embodiments of a joint according to the present invention; and
- figure 9 is a section according to the line IX-IX of figure 3.

### BEST MODE FOR CARRYING OUT THE INVENTION

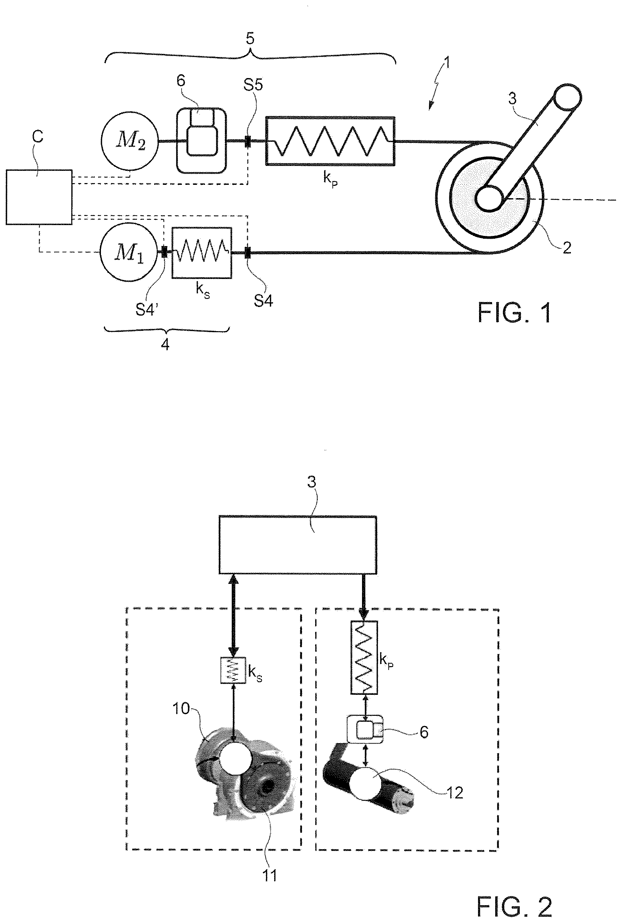

Figure 1 schematically illustrates a hinge joint 1 with agonist-anatagonist actuation comprising a supporting bush 2, an arm 3 pivoting with respect to the bush 2 and radially supported by the latter, a high power actuator 4 and a low power actuator 5 connected to the arm 3 to define the agonist - antagonist actuation.

According to the embodiment of figure 1, the high power actuator 4 is bidirectional, i.e. it controls the position of the arm 3 in both a clockwise direction and in an counter clockwise direction and performs the function of both extending actuator and bending actuator. The actuator 4 has a high power motor M1 and a high stiffness spring ks to transmit a load passively from the motor M1 to the arm 3. Therefore the high stiffness spring ks, the high power motor M1 and the arm 3 are in series (figure 1). Advantageously, the motor M1 is rotary and the high stiffness spring ks is a passive torsional spring, i.e. having a predefined elastic characteristic which theoretically remains constant or can vary with time following use of the joint 1 and not by means of the intervention of an automatic control mechanism. The elastic characteristic of the high stiffness spring ks is high to allow a prompter response of the arm 3 to the commands of the motor M1. Between the motor M1 and the high stiffness spring ks a speed demultiplier can be provided to increase the load applied by the motor M1 to the arm 3 and/or to the high stiffness spring ks.

The high stiffness spring ks also allows absorption of any impact load that may be applied in use to the arm 3 so as to avoid potential damage of the motor M1 and/or of the speed reducer.

According to the non-limiting embodiment of figure 1, the low power actuator 5 comprises, arranged in series, a low power motor M2, i.e. with maximum or nominal power lower than that of the motor M1, a low stiffness spring kp i.e. with stiffness such as to store a maximum elastic energy lower than the energy storable by the spring ks to passively transmit a load between the arm 3 and the low power motor M2, and an input-output asymmetric connection 6 to lock the low stiffness spring kp in a loaded position when a rotor of the motor M2 is not energised or to brake an inverse action of the low stiffness spring kp on the motor M2 which tends to unload the low stiffness spring kp when the rotor of the motor M2 is not energised. In particular, when the arm 3 is at a standstill, a direct movement of the low power motor M2 loads or unloads the low stiffness spring kp and, when the rotor of the motor M2 is not energised, the low stiffness spring kp can be either unloaded or loaded elastically. The asymmetric connection 6 transfers an input load from the motor M2 towards an output to which the low stiffness spring kp is connected. The asymmetric connection 6 is constructed in such a way that an input load applied by the motor M2 is transmitted at the output to the low stiffness spring kp both to load and unload the spring kp; the load applied by the low stiffness spring kp is not transmitted inversely from the output towards the input of the asymmetric connection 6 or is transmitted to a very limited extent so as to slow down the release of the spring kp. When the low tension spring kp is unidirectional and the motor M2 is rotary, the asymmetric connection 6 is a two-way overrunning clutch and an embodiment of said connection will be described below. Furthermore, the asymmetric connection 6 can be passive, i.e. it does not feature a specific actuator to lock or brake the inverse action of the low stiffness spring kp towards the motor M2. Both the spring ks and the spring kp are such that a movement of the arm 3 along its trajectory entails a variation in the load applied to each spring.

Furthermore, the low power actuator 5 has a greater efficiency than that of the high power actuator 4 in transmission of power to the arm 3. In particular, the efficiency of the actuators 4 and 5 is the combination of the efficiency of the motors M1, M2 and any transmissions, for example transmissions for speed demultiplication, interposed between the motors M1, M2 and the arm 3. The efficiency can be calculated as a ratio between the output power and the input power of each component of the actuators 4 and 5 and is between 0 and 1. For example, the efficiency of the power applied to the low stiffness spring kp is the ratio between the latter and the power supply of the motor M2. Advantageously, if also the low power actuator 5 comprises a speed reducer, the latter has a lower demultiplication ratio than that of the high power actuator 4 so as to present a higher efficiency.

According to the non-limiting example of figure 1, the high stiffness spring ks is bidirectional so as to control the arm 3 along a trajectory in one direction and in the opposite direction. The low stiffness spring kp, on the other hand, is a unidirectional spring, i.e. it controls the arm 3 to travel over the relative trajectory in one direction only and not in the opposite direction. In the embodiment of figure 1, the arm 3 follows a circular trajectory and the spring ks is loaded when the arm 3 moves in both a clockwise and anticlockwise direction with respect to an equilibrium point while the spring kp is loaded only when the arm moves in a clockwise direction and is unloaded when the arm moves in an anticlockwise direction. In particular, the low stiffness spring kp is arranged so as to apply an extending load to the arm 3.

Therefore the motor M1, by means of an appropriate control unit C, applies a bending and extending load to the arm 3 and actively controls the position of the arm 3. The motor M2 is appropriately actively controlled by means of the control unit C mainly to vary the tension of the low stiffness spring kp.

The elastic load applied by the low power actuator 5 to the arm 3 is preferably non-linear. In this way it is possible to change the stiffness of the joint 1 on the basis of the tension of the low stiffness spring kp. For said purpose, the elastic characteristic of the low power actuator 5 can be stored in the control unit C so as to control the elastic stiffness of the joint 1 both by means of a closed ring control and by means of an open ring control.

In order to control the high power and low power actuators 4, 5, the joint 1 comprises a first sensor S4 to measure the position, for example the absolute angular position, of the arm 3 and a second sensor S5 to measure the load of the low stiffness spring kp. The joint 1 can furthermore comprise a sensor S4' to detect the load applied by the high power actuator 4 to the arm 3. The sensors S4, S4' and S5 can measure various quantities which are processed by the control unit C or by means of simple amplification or by means of calculations to obtain the desired position and load parameters and send the consequent control signals to the motors M1 and M2. As regards the load sensors, the components of each actuator 4 and 5 are in series to one another and the position of the relative sensor S4', S5 is such as to measure the load which theoretically is transmitted without losses by the relative motor M1 or M2 to the arm 3. The sensor S4 is positioned directly on the arm 3 or on a member rigidly connected to the arm 3 so that the measurement of the position of the arm 3 is sufficiently precise. Therefore, the high stiffness spring ks can also perform the function of a probe to measure the load applied by the high power actuator 4 to the arm 3.

It has been found that high efficiency results can be obtained when the elastic elongation, which can be linear or non-linear, of the low stiffness spring kp has a value higher than 30%, even more preferably higher than 90%. By means of a metal spring it is possible to obtain an elastic elongation value higher than 30% while elastic elongation values higher than 90% are easily obtained by means of springs based on rubber or other equivalent elastomeric material.

Figure 2 illustrates a schematic example of actuators that can be used in the joint 1. In particular, the high power motor M1 comprises a rotary electric motor 10 to control in a bidirectional manner an eccentric 11 by means of the high stiffness spring ks.

Furthermore, the low power motor M2 comprises a linear motor comprising a rotary electric motor 12 connected to a screw - nut screw mechanism by means of the asymmetric connection 6 to load or unload the low stiffness spring kp, which in said case is a unidirectional traction spring.

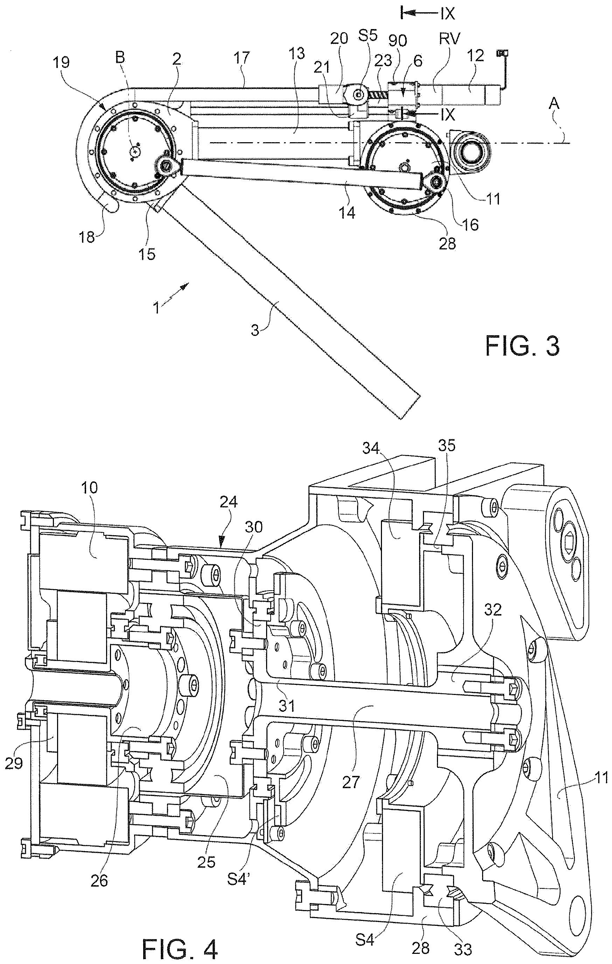

Figure 3 illustrates a prototype embodiment of a joint according to the diagrams of figures 1 and 2. Said prototype can be used as a joint for an elbow, a knee or a shoulder of a robot.

The joint 1 comprises a rigid structure 13 to connect the bush 2 to respective outer casings of the rotary electric motor 10 and of the rotary electric motor 12 so that the eccentric 11 is movable with respect to the rigid structure 13. If the joint 1 has to be applied to a joint of a robot, for example a knee for a robotised leg, the eccentric 11 and the bush 2 are spaced and the rigid structure 13 is elongated in a direction A and the arm 3 is connected to the eccentric 11 by means of a connecting rod 14 advantageously sized to provide a 1:1 transmission ratio. In particular, the connecting rod 13 comprises an end portion 15 hinged to the arm 3 in an eccentric position with respect to an axis B of rotation defined by the bush 2 and an end portion 16 connected to the eccentric 11. Preferably, the connection hinged between the end portion 15 and the arm 3 is radially internal to the bush 2.

In figure 3, the low stiffness spring kp comprises a traction spring 17 made of a rubber-based material with a maximum elastic elongation higher than 110%. In order to connect the traction spring 17 to the arm 3, with transmission of the load, an end portion 18 of the traction spring 17 is connected to the arm 3 in an eccentric position with respect to the axis B and the traction spring 17 rests along a guide fixed to the arm 3 and defining a curved surface 19. The curved surface 19 presents a profile having point by point a predefined distance from the axis B and defines a sector of a pulley or a cam. By means of a cam it is possible to apply a non-linear elastic load to the arm 3 also by means of a traction spring 17 having a linear elastic characteristic. In figure 3 the curved surface 19 has an arc of a circle profile with respect to the axis B.

An end portion 20 opposite the end portion 18 of the traction spring 17 is connected to a nut screw 21, a loading cell being interposed which defines the sensor S5. The rotary electric motor 12 is connected to the nut screw 21 by means of a screw 23 and the asymmetric connection 6 arranged between the nut screw 23 and the rotary electric motor 12. Furthermore, the rotary electric motor 12 can comprise a speed reducer RV upstream of the asymmetric connection 6 and/or of the screw 23. For example, the speed reducer RV has a demultiplication ratio higher than 15:1, preferably approximately 29:1 obtained by means of a planetary gear train, reversible if necessary.

According to a preferred embodiment of the present invention, the traction spring 17 comprises a bundle of rubber-based filaments surrounded by a sheath advantageously made of a fabric with an elastic elongation much lower than that of the rubber filaments. The sheath has a length greater than that of the filaments in the deformed condition and is fixed to the bundle of filaments so as to radially compress the filaments when the latter lengthen beyond a predetermined elongation value. Figure 4 schematically illustrates a longitudinal section of the rotary electric motor 10 and of a transmission 24 to connect the rotary electric motor 10 to the eccentric 11.

The transmission 24 comprises a speed demultiplier 25 (illustrated only schematically) to reduce the transmission ratio between an output shaft 26 of the rotary electric motor 10, and a torsion bar 27 connected to the output of the speed reducer 25 defining an embodiment of the high stiffness spring ks.

Preferably, the rotary electric motor 10 is a brushless direct current motor with thermally insulated windings to operate at temperatures up to 220° and the speed reducer 25 is harmonic to obtain demultiplication ratios higher than 50:1, of approximately 80:1, in compact dimensions. In particular, the diameter dimension of the speed reducer 25 is smaller than that of the rotary electric motor 10.

The torsion bar 27 is housed in a casing 28 which rigidly connects the speed reducer 25 and the rigid structure 13 and defines a radial support for the eccentric 11. The rotary electric motor 10 is rigidly connected to and supported by the speed reducer 25.

The position control of the arm 3 is guaranteed by means of a first angular position sensor 29 mounted on the output shaft 26 upstream of the speed reducer 25, the sensor S4' being arranged on the output of the speed reducer 25 and the sensor S4 being arranged between the eccentric 11 and the casing 28. According to the present embodiment, the position sensors are encoders, the sensors 29, S4' are incremental and the sensor S4 is absolute. In this way, the combination of the sensors S4, S4' and of the torsion bar 27 allows measurement of the load applied to the arm 3 by the high power actuator 4. Advantageously, the sensor S4' is mounted inside the casing 28 on a connecting flange 30 which rigidly fixes the output of the speed reducer 25 to one end 31 of the torsion spring 27, the latter being connected to the eccentric 11 by means of an end portion 32 longitudinally opposite the end 31. The sensor S4 is inside the casing 28 and has a portion 34 fixed to the latter and a portion connected to the eccentric 11. In particular, the eccentric 11 is connected to the casing 28 by means of a bearing 33 which surrounds the end portion 32 and has an outer ring fixed to the casing 28 and an inner ring fixed to the eccentric 11 and to the portion 35.

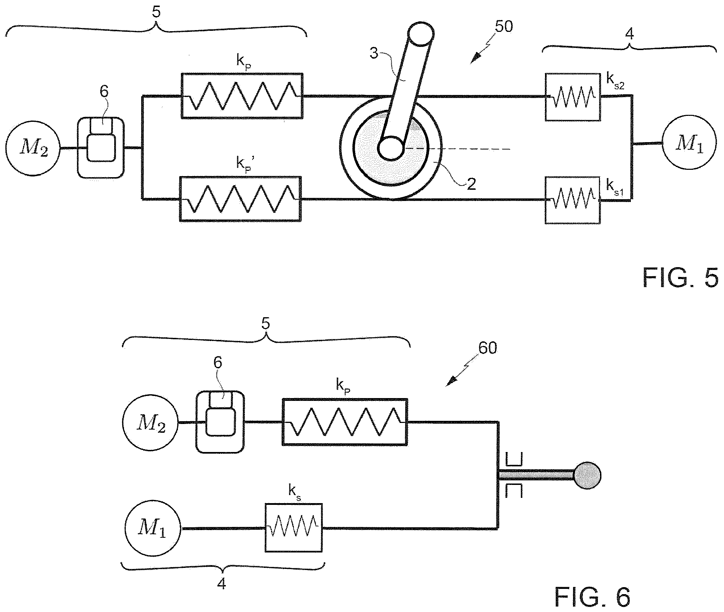

Figure 5 illustrates a diagram of a joint 50 having a structure identical to that of the joint of figure 1 except for the following. The joint 50 comprises a further low stiffness unidirectional spring kp' connected to the arm 3 so that the low stiffness spring kp is loaded while the low stiffness spring kp' is unloaded, i.e. to generate a bidirectional action. The low stiffness spring kp' has an additional action to that of the high power actuator 4 on the arm 3, but can store a maximum quantity of elastic energy greater than that of the high stiffness spring ks. The low stiffness spring kp' can be connected to the low power motor M2 so that the relative load is controlled in a coordinated manner with respect to that of the low stiffness spring kp.

The joint 50 can furthermore have two high stiffness unidirectional springs ks1 and ks2 connected to the arm 3 to obtain a bidirectional action equal to that of the single bidirectional high stiffness spring ks. Preferably, the high stiffness springs ks1 and ks2 are both connected to the high power motor M1. Furthermore, one of the high stiffness springs ks1 applies an extending load to the arm 3 and the other of the high stiffness springs ks2 applies a bending load to the arm 3.

In figure 6 a prismatic or linear joint 60 is schematised. According to an embodiment, the motors M1 and M2 can be both linear, for example pneumatic, and the high stiffness spring can be a constrained helical spring to be loaded both in traction and in compression.

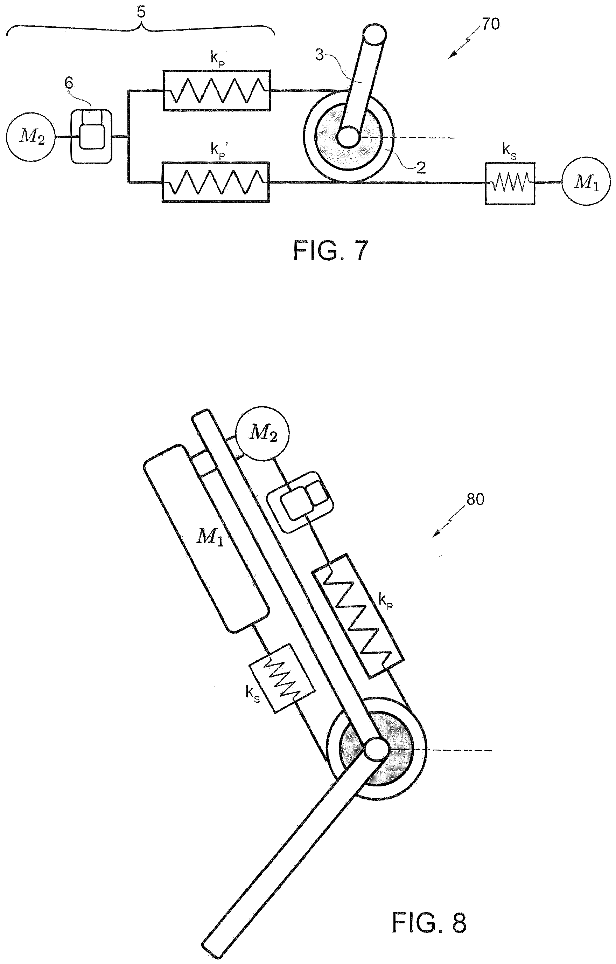

Figure 7 illustrates a joint 70 having a structure identical to that of the joint of figure 1 except for the following. The joint 70 comprises the combination of two low stiffness springs kp, kp' unidirectional and in parallel with respect to the arm 3 and a high stiffness bidirectional spring ks.

Figure 8 illustrates a functional diagram of a joint 80 which differs from the joint of figure 3 due to the fact that the motor M1 is a linear actuator associated with a traction-compression spring ks.

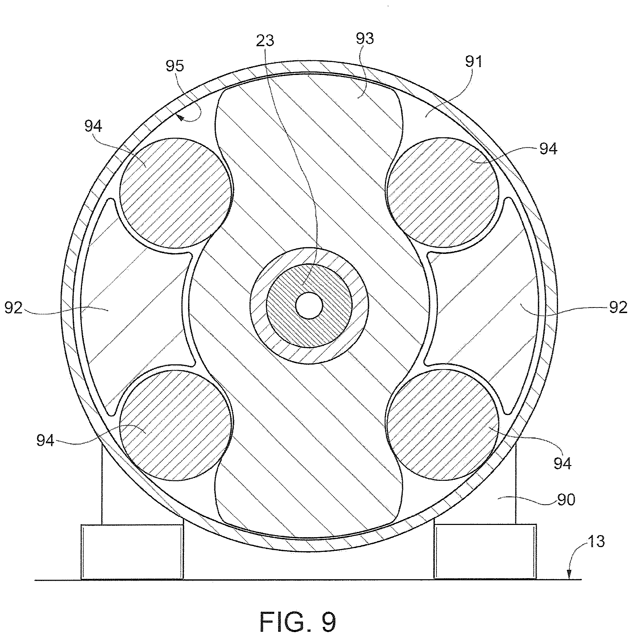

According to the non-limiting embodiment of figure 9, the asymmetric connection 6 comprises a casing 90 fixed for example to the rigid structure 13 and defining a seat 91, an input element 92 revolving in the seat 91, an output element 93 rigidly connected to the screw 23 and revolving with respect to the input element 92 and a plurality of rollers 94. The input element 92 is connected to the low power motor M2 and is shaped with contact surfaces for the rollers 94 such as to apply a force that tends to space the rollers 94 from an inner cylindrical surface 95 of the seat 91 when the motor M2 transmits a load to the screw 23 both in a clockwise and counter clockwise direction. In said operating condition, the torque is transferred by means of a load which compresses a pair of rollers 94 between the input element 92 and the output element 93, the other pair of rollers being compressed when the torque of the motor M2 inverts direction. The locking or slowing-down action, due to braking or locking when the rotor of the motor M2 is inactive, compresses a pair of rollers 94 between the output element 94 and the inner surface 95 by means of a load which has, for example, a substantially radial direction. In said condition, the friction between the roller 94 and the inner surface 95 brakes, slows down or locks the output element 93 when the tension of the low stiffness spring kp tends to apply an inverse load to the motor M2. The braking, slowing down or locking action is performed by another pair of rollers when the inverse load of the screw 23 changes direction.

In use, the high power actuator 4 is controlled independently by the low power actuator 5 so as to achieve different and flexible energy management strategies. The actuators are controlled independently but the loads detected by the sensors S4, S4', S5 are influenced both by a load applied to the arm 3 and by the load applied by both the actuators 4 and 5. The high power actuator 4 rapidly transmits a load to the arm 3 since it has a high overall stiffness. Furthermore, the high power actuator 4 can be optimised to provide energy peaks and withstand impact loads.

The low power actuator 5 is activated to vary the tension of the low stiffness spring kp to maintain for example positions of stable equilibrium when the arm 3 is under a static external load without the high power actuator 4 absorbing a large amount of energy. Said positions, furthermore, can be maintained with low or null energy consumption of the low power actuator 5 by means of the asymmetric connection 6.

The advantages of the joint 1 and of the further embodiments according to the present invention are the following.

The separation between the high power actuator 4 and the low power actuator 5 in which the latter has a greater capacity for accumulation of elastic energy allows the production of an optimised joint to obtain both lower response times and high energy efficiency.

The high power actuator 4 defines the substantial characteristics in terms of load and rapid response of the joint 1 and this can negatively impact on efficiency according to the dynamic performance required. The low power actuator 5 is produced mainly to vary the tension of the low stiffness spring kp and is therefore simpler, in order to reduce the energy consumption and increase as far as possible the efficiency of said actuator.

When the actuators 4 and 5 are independent of each other, the possible control strategies can be widened and the energy consumption can therefore be limited in various operating conditions.

The asymmetric connection 6 allows positions of equilibrium to be maintained when the arm 3 is under load with a minimum or null energy consumption.

The position and/or load sensors S4, S4', S5 allow control of the joint. In particular, the elastic element ks can simultaneously perform both the function of probe of the load sensor of the high power actuator 4 and that of absorbing impact loads applied to the arm 3 so as to protect the high power motor M1. In fact, the external impact loads applied to the arm 3 are transmitted mainly to the stiffer element, i.e. to the high power actuator 4, which may therefore require appropriate protection.

When the high power actuator 4 is bidirectional and preferably when the low power actuator 5 is unidirectional, an optimised configuration is obtained for a knee joint for a humanoid robot.

When the two elastic elements kp, kp' are provided arranged in parallel with respect to the arm 3, the joint can maintain in an elastically stable manner a predefined position with a minimum or null consumption of power supply energy for the actuators, even though the arm 3 is not subject to any external loads.

When the load applied to the arm 3 by the low stiffness elastic element kp is not linear, a variation in tension by means of the low power motor 5 entails a variation in the torsional elastic stiffness of the joint.

Lastly, it is clear that variations or modifications can be made to the joint described and illustrated here without departing from the protective scope as defined by the attached claims.

When the high power actuators 4 and/or low power actuators 5 comprise pairs of unidirectional springs arranged in parallel to the arm 3, the relative stiffness characteristics can be the same or different.

It is possible for the high power actuator 4 not to comprise the high stiffness spring ks so that the transmission of power to the arm 3 is, at least theoretically, rigid. In this case, the elastic energy that can be accumulated by the high power actuator 4 is substantially null.

Depending on the applications, the speed demultipliers can be replaced by speed multipliers.

In a particularly simplified embodiment, it is possible to omit the high stiffness spring ks.

## Claims

1. An actuated joint (1) comprising a first element (2, 13) and a second element (3) movable one with respect to the other, a first actuator (4) and a second actuator (5) connected to said first and second element (2, 3, 13) for controlling the movement of said joint (1) in an agonist-antagonist way, wherein said first actuator (4) has a nominal or maximum power greater than that of said second actuator (5) and said second actuator (5) comprises at least a first elastic element (kp) extendable so to store a maximum amount of elastic energy greater than that storable by said first actuator (4), **characterised in that** the transmission efficiency of the power supply of said second actuator (5) with respect to the power transmitted to said arm (3) is greater than the transmission efficiency of the power supply of said first actuator (4) with respect to the power applied by said first actuator to said arm (3).

2. The joint according to claim 1, **characterized in that** said first actuator (4) comprises a first speed variator (25) and said second actuator (5) comprises a second speed variator (RV), said second speed variator (RV) having an efficiency greater than that of said first speed variator (25).

3. The joint according to any preceding claims, **characterized in that** said first actuator (4) is controlled independently with respect to said second actuator (5).

4. The joint according to any preceding claims, **characterized in that** said second actuator (5) comprises a tensioning device (12, 21, 23) connected in series to said elastic element (Kp) and an input-output asymmetric connection (6) arranged between said elastic element (kp) and said tensioning device (12, 21, 23) to lock or brake a reverse transmission of the load from said elastic element (kp) to said tensioning device (12, 21, 23) and allow the tensioning or the release of said elastic element (kp) by way of said tensioning device (12, 21, 23) .

5. The joint according to claim 4, **characterized in that** said input-output asymmetric connection (6) is passive.

6. The joint according to any preceding claims, **characterized by** comprising a position sensor (S4) for defining the respective position of said first and second element (2, 13, 3).

7. The joint according to any preceding claims, **characterized by** comprising a load sensor (S5) for measuring the tension of said elastic element (kp).

8. The joint according to any preceding claims, **characterized in that** said first actuator (4) comprises a further elastic element (ks) having a maximum stiffness greater than that of said first elastic element (kp).

9. The joint according to any preceding claims, **characterized in that** said first actuator (4) comprises an additional load sensor (S4, S4') for measuring the load between said first actuator and said movable element (3).

10. The joint according to claims 8 and 9, **characterized in that** said load sensor (S4, S4') comprises said further elastic element (ks).

11. The joint according to any preceding claims, **characterized in that** said first actuator (4) controls said movable element (3) in a bidirectional way.

12. The joint according to any preceding claims, **characterized in that** said elastic element (kp) is unidirectional.

13. The joint according to claim 12, **characterized by** comprising a second elastic element (kp') connected to said second element (3) to apply a bidirectional action in combination with said elastic element (kp) and extendable in order to store a maximum amount of elastic energy greater than that storable by said first actuator (4).

14. The joint according to claim 13, **characterized in that** said second actuator (5) comprises said second elastic element (kp').

15. The joint according to any preceding claims, **characterized in that** said elastic element (kp) applies a non-linear elastic load to said second element (3).

## Patentansprüche

1. Angetriebenes Gelenk (1), das ein erstes Element (2, 13) und ein zweites Element (3), die relativ zueinander bewegt werden können, sowie einen ersten Aktor (4) und einen zweiten Aktor (5), die mit dem ersten und zweiten Element (2, 3, 13) verbunden sind, um die Bewegung des Gelenks (1) in einer Agonist-Antagonist-Weise zu steuern, umfasst, wobei der erste Aktor (4) eine Nennleistung oder Höchstleistung aufweist, die größer ist als jene des zweiten Aktors (5), und der zweite Aktor (5) zumindest ein erstes elastisches Element (kp) umfasst, das gedehnt werden kann, um eine maximale Menge an elastischer Energie, die größer ist als jene, die durch den ersten Aktor (4) gespeichert werden kann, zu speichern, **dadurch gekennzeichnet, dass** die Übertragungseffizienz der Leistungsversorgung des zweiten Aktors (5) bezüglich der Leistung, die zu dem Arm (3) übertragen wird, größer ist als die Übertragungseffizienz der Leistungsversorgung des ersten Aktors (4) bezüglich der Leistung, die von dem ersten Aktor auf den Arm (3) angewendet wird.

2. Gelenk nach Anspruch 1, **dadurch gekennzeichnet, dass** der erste Aktor (4) einen ersten Drehzahlvariator (25) umfasst und der zweite Aktor (5) einen zweiten Drehzahlvariator (RV) umfasst, wobei der zweite Drehzahlvariator (RV) eine Effizienz aufweist, die größer ist als jene des ersten Drehzahlvariators (25).

3. Gelenk nach einem der vorhergehenden Ansprüche, **dadurch gekennzeichnet, dass** der erste Aktor (4) unabhängig von dem zweiten Aktor (5) gesteuert wird.

4. Gelenk nach einem der vorhergehenden Ansprüche, **dadurch gekennzeichnet, dass** der zweite Aktor (5) eine Spannvorrichtung (12, 21, 23), die mit dem elastischen Element (kp) in Reihe verbunden ist, und eine asymmetrische Eingangs/Ausgangs-Verbindung (6) umfasst, die zwischen dem elastischen Element (kp) und der Spannvorrichtung (12, 21, 23) angeordnet ist, um eine Rückübertragung der Last von dem elastischen Element (kp) zu der Spannvorrichtung (12, 21, 23) zu blockieren oder abzubremsen, und das Spannen oder Lösen des elastischen Elements (kp) über die Spannvorrichtung (12, 21, 23) zu erlauben.

5. Gelenk nach Anspruch 4, **dadurch gekennzeichnet, dass** die asymmetrische Eingangs-Ausgangs-Verbindung (6) passiv ist.

6. Gelenk nach einem der vorhergehenden Ansprüche, **gekennzeichnet durch** einen Positionssensor (S4) zum Definieren der jeweiligen Position des ersten und des zweiten Elements (2, 13, 3).

7. Gelenk nach einem der vorhergehenden Ansprüche, **gekennzeichnet durch** einen Lastsensor (S5) zum Messen der Spannung des elastischen Elements (kp).

8. Gelenk nach einem der vorhergehenden Ansprüche, **dadurch gekennzeichnet, dass** der erste Aktor (4) ein weiteres elastisches Element (ks) umfasst, das eine maximale Steifigkeit aufweist, die größer ist als jene des ersten elastischen Elements (kp).

9. Gelenk nach einem der vorhergehenden Ansprüche, **dadurch gekennzeichnet, dass** der erste Aktor (4) einen zusätzlichen Lastsensor (S4, S4') zum Messen der Last zwischen dem ersten Aktor und dem beweglichen Element (3) umfasst.

10. Gelenk nach Anspruch 8 und 9, **dadurch gekennzeichnet, dass** der Lastsensor (S4, S4') das weitere elastische Element (ks) umfasst.

11. Gelenk nach einem der vorhergehenden Ansprüche, **dadurch gekennzeichnet, dass** der erste Aktor (4) das bewegliche Element (3) bidirektional steuert.

12. Gelenk nach einem der vorhergehenden Ansprüche, **dadurch gekennzeichnet, dass** das elastische Element (kp) unidirektional ist.

13. Gelenk nach Anspruch 12, **gekennzeichnet durch** ein zweites elastisches Element (kp'), das mit dem zweiten Element (3) verbunden ist, um einen bidirektionalen Betrieb in Kombination mit dem elastischen Element (kp) anzuwenden, und das dehnbar ist, um eine maximale Menge an elastischer Energie, die größer ist als jene, die von dem ersten Aktor (4) gespeichert werden kann, zu speichern.

14. Gelenk nach Anspruch 13, **dadurch gekennzeichnet, dass** der zweite Aktor (5) das zweite elastische Element (kp') umfasst.

15. Gelenk nach einem der vorhergehenden Ansprüche, **dadurch gekennzeichnet, dass** das elastische Element (kp) eine nichtlineare elastische Last auf das zweite Element (3) anwendet.

## Revendications

1. Articulation (1) actionnée comprenant un premier élément (2, 13) et un deuxième élément (3) mobiles les uns par rapport aux autres, un premier actionneur (4) et un deuxième actionneur (5) reliés audit premier et audit deuxième élément (2, 3, 13) pour commander le mouvement de ladite articulation (1) d'une manière agoniste-antagoniste, dans laquelle ledit premier actionneur (4) a une puissance nominale ou maximale supérieure à celle dudit deuxième actionneur (5) et ledit deuxième actionneur (5) comprend au moins un premier élément élastique (kp) pouvant s'étendre afin de stocker une quantité maximale d'énergie élastique supérieure à celle pouvant être stockée par ledit premier actionneur (4), **caractérisée en ce que**
l'efficacité de transmission de l'apport en puissance dudit deuxième actionneur (5) par rapport à la puissance transmise audit bras (3) est supérieure à l'efficacité de transmission de l'apport en puissance dudit premier actionneur (4) par rapport à la puissance appliquée par ledit premier actionneur sur ledit bras (3).

2. Articulation selon la revendication 1, **caractérisée en ce que** ledit premier actionneur (4) comprend un premier variateur de vitesse (25) et ledit deuxième actionneur (5) comprend un deuxième variateur de vitesse (RV), ledit deuxième variateur de vitesse (RV) ayant une efficacité supérieure à celle dudit premier variateur de vitesse (25).

3. Articulation selon l'une quelconque des revendications précédentes, **caractérisée en ce que** ledit premier actionneur (4) est commandé indépendamment par rapport audit deuxième actionneur (5).

4. Articulation selon l'une quelconque des revendications précédentes, **caractérisée en ce que** ledit deuxième actionneur (5) comprend un dispositif de tension (12, 21, 23) relié en série audit élément élastique (kp) et une liaison asymétrique d'entrée-sortie (6) agencée entre ledit élément élastique (kp) et ledit dispositif de tension (12, 21, 23) pour verrouiller ou freiner une transmission inverse de la charge depuis ledit élément élastique (kp) audit dispositif de tension (12, 21, 23) et permettre la tension ou le relâchement dudit élément élastique (kp) au moyen dudit dispositif de tension (12, 21, 23).

5. Articulation selon la revendication 4, **caractérisée en ce que** ladite liaison asymétrique d'entrée-sortie (6) est passive.

6. Articulation selon l'une quelconque des revendications précédentes, **caractérisée en ce qu'**elle comprend un capteur de position (S4) pour définir la position respective dudit premier et dudit deuxième élément (2, 13, 3).

7. Articulation selon l'une quelconque des revendications précédentes, **caractérisée en ce qu'**elle comprend un capteur de charge (S5) pour mesurer la tension dudit élément élastique (kp).

8. Articulation selon l'une quelconque des revendications précédentes, **caractérisée en ce que** ledit premier actionneur (4) comprend un autre élément élastique (ks) ayant une rigidité maximale supérieure à celle dudit premier élément élastique (kp).

9. Articulation selon l'une quelconque des revendications précédentes, **caractérisée en ce que** ledit premier actionneur (4) comprend un capteur de charge (S4, S4') supplémentaire pour mesurer la charge entre ledit premier actionneur et ledit élément (3) mobile.

10. Articulation selon les revendications 8 et 9, **caractérisée en ce que** ledit capteur de charge (S4, S4') comprend ledit autre élément élastique (ks).

11. Articulation selon l'une quelconque des revendications précédentes, **caractérisée en ce que** ledit premier actionneur (4) commande ledit élément (3) mobile d'une manière bidirectionnelle.

12. Articulation selon l'une quelconque des revendications précédentes, **caractérisée en ce que** ledit élément élastique (kp) est unidirectionnel.

13. Articulation selon la revendication 12, **caractérisée en ce qu'**elle comprend un deuxième élément élastique (kp') relié audit deuxième élément (3) pour appliquer une action bidirectionnelle en combinaison avec ledit élément élastique (kp) et pouvant s'étendre dans le but de stocker une quantité maximale d'énergie élastique supérieure à celle pouvant être stockée par ledit premier actionneur (4).

14. Articulation selon la revendication 13, **caractérisée en ce que** ledit deuxième actionneur (5) comprend ledit deuxième élément élastique (kp').

15. Articulation selon l'une quelconque des revendications précédentes, **caractérisée en ce que** ledit élément élastique (kp) applique une charge élastique non linéaire sur ledit deuxième élément (3).
